# EUROPÄISCHE PATENTANMELDUNG

(11) **EP 1 762 948 A1**
(43) Veröffentlichungstag der Anmeldung: **14.03.2007**
(21) Anmeldenummer: 06019083.2
(22) Anmeldetag: 12.09.2006
(51) Int. Cl.: G06F 17/30

(54) **Verfahren zum Handhaben von Informationen über unterschiedliche Datenobjekte, Endgerät für die Verwendung in einem Netzwerk und Logbuchprogramm für ein Endgerät**

(30) Priorität: 13.09.2005 DE 102005043639
(71) Anmelder: Vodafone Holding GmbH, 40213 Düsseldorf (DE)
(72) Erfinder: Curson, Ian, 50670 Köln (DE); Foley, Peter, St. Albans, AL3 5LG (GB)
(74) Vertreter: Müller, Thomas

(57) **Zusammenfassung**

Es wird ein Verfahren zum Handhaben von Informationen über Datenobjekte unterschiedlicher Typen in einem Endgerät offenbart, bei dem jeweils zumindest ein relevanter Zeitpunkt für die von dem Verfahren erfassten Datenobjekte bestimmt wird; bei dem die erfassten Datenobjekte in einer chronologischen Abfolge gemäß ihrer relevanten Zeitpunkte sortiert werden; und bei dem Informationen zumindest einer Teilmenge der erfassten Datenobjekte gemäß ihrer Sortierung auf einer Anzeige des Endgeräts angezeigt werden; wobei vorzugsweise zu jedem der angezeigten, erfassten Datenobjekte zumindest der relevante Zeitpunkt und eine Information über einen Typ des Datenobjekts angezeigt werden.

## Beschreibung

Die vorliegende Erfindung bezieht sich auf ein Verfahren zum Handhaben von Informationen über Datenobjekte unterschiedlicher Typen in einem Endgerät, wie einem PDA, einem Mobiltelefon oder dergleichen; auf ein entsprechendes Endgerät, vorzugsweise zur Durchführung des Verfahrens, zur Verwendung mit einem Kommunikationsnetzwerk; sowie auf ein Logbuchprogramm für ein Endgerät, insbesondere für ein erfindungsgemäßes Endgerät, das Datenobjekte verschiedener Typen anzeigt.

Untersuchungen zur Verwendung von mobilen Endgeräten wie Personal Digital Assistents (PDAs) und Mobiltelefonen haben gezeigt, dass die Anwender zwar die Speicherung und Verwaltung unterschiedlicher Informationen, wie Adressinformationen, Kalendereinträgen, E-Mails, Bildern und dergleichen auf den entsprechenden Geräten als prinzipiell nützlich empfinden, jedoch mit der Bedienphilosophie, die sich stark an übliche Computersysteme anlehnt, beim gegebenen Einsatzzweck und der gewünschten einfachen Handhabung nicht zurecht kommen.

Derzeit werden Adressbucheinträge, empfangene Nachrichten und heruntergeladene Inhalte in verschiedenen, nicht miteinander verwandten Programmen beziehungsweise Datenbanken eines Mobiltelefons gespeichert. Diese Trennung erzeugt eine Komplexität bezüglich des Verständnisses der Kontextbeziehung (Zeit und Ort) dieser gespeicherten Informationen. Innerhalb jedes Informationsspeichers, wie zum Beispiel einer Nachrichteneingangsbox, Mediendateien und heruntergeladene Inhaltsspeicher wird dem Anwender üblicherweise eine zeitbasierte oder eine alphabetisierte Liste an Inhalten dargestellt, wobei der zuletzt gespeicherte Inhalt beziehungsweise die/der zuletzt gespeicherte Datei/Datensatz oben erscheint.

Die aufgeführten Dateien oder Einträge können in einer Anzahl verschiedener Weisen repräsentiert werden. Einige werden zusammen mit dem Zeitpunkt der Speicherung und der Art des Datentyps gespeichert. Auf komplexeren Mobiltelefonen wird eine zusätzliche kleine Repräsentation (Thumbnail) neben einem neuen Eintrag platziert.

In anderen Fällen repräsentiert die Telefonnummer eines Anrufers die von ihm übersandten Dateien. Einige neuere Telefone zeigen dabei die erste Textzeile, wenn dieser Dateityp in einer Liste hervorgehoben wird. Diese numerische Datenrepräsentation gespeicherter Daten erzeugt eine zusätzliche Komplexität bei der Bedienung des Telefons.

Es ist daher die Aufgabe der vorliegenden Erfindung, eine programmtechnische Verknüpfung zwischen verschiedenen, zuvor unabhängigen Programmen so herzustellen, dass dem Benutzer eine einheitlichere und verständlichere Darstellung und Handhabung von Informationen ermöglicht wird.

Diese Aufgabe wird erfindungsgemäß durch das Verfahren zum Handhaben von Informationen gemäß dem unabhängigen Patentanspruch 1, das Endgerät für die Verwendung mit einem Kommunikationsnetzwerk gemäß dem unabhängigen Patentanspruch 8 und das Logbuchprogramm für ein Endgerät gemäß dem unabhängigen Patentanspruch 11 gelöst. Weitere vorteilhafte Ausgestaltungen, Details und Aspekte der vorliegenden Erfindung ergeben sich aus den abhängigen Patentansprüchen, der Beschreibung und den beigefügten Zeichnungen.

Der vorliegenden Erfindung liegt die Idee zugrunde, eine zeitbasierte Ansicht aller gespeicherten Informationen in einem Endgerät unabhängig von ihrem Datentyp bereitzustellen.

Gemäß einem ersten Aspekt ist die Erfindung auf ein Verfahren zum Handhaben von Informationen über Datenobjekte unterschiedlicher Typen in einem Endgerät gerichtet, bei dem jeweils zumindest ein relevanter Zeitpunkt für die von dem Verfahren erfassten Datenobjekte bestimmt wird; bei dem die erfassten Datenobjekte in einer chronologischen Abfolge gemäß ihrer relevanten Zeitpunkte sortiert werden und bei dem Informationen zumindest einer Teilmenge der erfassten Datenobjekte gemäß ihrer Sortierung auf eine Anzeige des Endgerätes angezeigt werden; wobei zu jedem der angezeigten erfassten Datenobjekte zumindest der relevante Zeitpunkt und eine Information über einen Typ des Datenobjekts angezeigt werden.

Unter einem Datenobjekt ist hierbei im Sinne der vorliegenden Erfindung jede logische Einheit von Daten zu verstehen, beispielsweise Dateien, Verzeichnisse, Datensätze in Datenbanken, Listeneinträge in Listen, Programme, und spezifischer gesagt, beispielsweise Filme, Bilder, Texte, Adressbucheinträge, Terminkalendereinträge, Einträge von Listen mit entgangenen Anrufen, und dergleichen.

Ein Endgerät ist im Sinne der vorliegenden Erfindung ein zur eigenständigen Datenverarbeitung geeignetes Gerät, auf dem Datenobjekte unterschiedlicher Typen gespeichert werden können und verarbeitet werden können. Vorzugsweise handelt es sich um portable Datenverarbeitungsgeräte, insbesondere Notebooks, PDAs oder Mobiltelefone.

Unter unterschiedlichen Typen von Datenobjekten soll im Sinne der Erfindung verstanden werden, dass die betrachteten Datenobjekte in der Regel nicht von einem Programm bearbeitet werden können beziehungsweise nicht denselben Dateityp haben beziehungsweise vom Betriebssystem unterschiedlich gehandhabt werden, und dergleichen. Unterschiedliche Typen sind bereits oben bei der Betrachtung der Datenobjekte exemplifiziert worden.

Unter einem relevanten Zeitpunkt ist im Sinne der vorliegenden Erfindung ein Zeitpunkt zu verstehen, der für das jeweilige Datenobjekt von besonderer Bedeutung ist oder als ein maßgeblicher Zeitpunkt festgelegt wird. Erfindungsgemäß werden die erfassten Datenobjekte (das heißt solche Datenobjekte, die dem Verfahren unterworfen werden) chronologisch gemäß ihrer relevanten Zeitpunkte sortiert. Diese Sortierung wird anschließend verwendet, um Informationen zu den Datenobjekten auf einer Anzeige in einer chronologischen Reihenfolge gemäß der relevanten Zeitpunkte anzuzeigen, wobei zusätzlich zu den Standardinformationen zumindest der relevante Zeitpunkt und eine Information über einen Typ des Datenobjekts angezeigt werden können. Die Informationen werden so auf der Anzeige gruppiert, dass ersichtlich ist, welche Informationen zu jeweils einem Datenobjekt gehören.

Durch das erfindungsgemäße Verfahren wird es möglich, dem Benutzer unabhängig von der Art des Datenobjektes in einer chronologischen Abfolge diese Datenobjekte anzuzeigen. Dieses Paradigma genügt in hervorragender Weise der menschlichen Fähigkeit zur chronologischen Anordnung von Ereignissen beziehungsweise Aktivitäten und entspricht damit der natürlichen Priorisierung von Zeitabläufen gegenüber beispielsweise Datentypen, wie sie bei bisherigen Datenverarbeitungsgeräten verwendet werden. Bei dem erfindungsgemäßen Verfahren werden die Datenobjekte zunächst bearbeitet, beispielsweise, indem sie unter anderem mit einem maßgeblichen Zeitpunkt, etwa im Sinne einer Zeitmarke, in Verbindung gebracht werden. Anschließend werden diese bearbeiteten Datenobjekte in einer bestimmten Sortierung dargestellt.

Vorzugsweise ist das erfindungsgemäße Verfahren dadurch gekennzeichnet, dass bei jeder Änderung an den Daten des Endgeräts ein relevanter Zeitpunkt in einer zum Typ eines geänderten oder hinzugefügten Datenobjekts geeigneten Weise festgestellt und mit dem Datenobjekt korreliert gespeichert wird. Dadurch ist es möglich, für sämtliche Datenobjekte dynamisch relevante Zeitpunkte festzulegen bzw. zu aktualisieren. Auf diese Weise gelangen beispielsweise Datenobjekte, an denen Änderungen vorgenommen worden sind (überarbeiteter Text, Adressänderung) entsprechend in der chronologischen Sortierung wieder nach "oben".

Vorzugsweise werden abhängig vom Typ des angezeigten Datenobjekts unterschiedliche weitere Information über das Datenobjekt angezeigt, um die Art des Datenobjekts beziehungsweise seinen konkreten Informationsinhalt möglichst genau darzustellen.

In einer bevorzugten Ausführungsform des erfindungsgemäßen Verfahrens kann die Information über den Typ des Datenobjekts mittels einer graphischen Darstellung erfolgen, beispielsweise durch Symbole (Icons), die jeweils einem bestimmten Typ vom Datenobjekt zugeordnet sind.

Gemäß der vorliegenden Erfindung wird weiterhin eine Anzeigeeinrichtung zum Handhaben von Informationen über Datenobjekte unterschiedlicher Typen in einem Endgerät, beispielsweise einem Mobiltelefon, bereitgestellt, aufweisend: Mittel zum Speichern von Datenobjekten; Mittel zum Bestimmen eines relevanten Zeitpunkts für erfasste Datenobjekte; Mittel zum Sortieren der erfassten Datenobjekte in einer chronologischen Abfolge gemäß ihrer relevanten Zeitpunkte; wobei in der Anzeigeeinrichtung zu jedem der dargestellten, erfassten Datenobjekte zumindest der relevante Zeitpunkt und eine Information über einen Typ des Datenobjekts anzeigbar sind, wobei in der Anzeigeeinrichtung die chronologische Darstellung nach Zeitabschnitten unterteilt ist.

Beispielsweise kann die Anzeigeeinrichtung derart ausgebildet sein, dass bei jeder Änderung an den Daten des Endgeräts ein relevanter Zeitpunkt in einer zum Typ eines geänderten oder hinzugefügten Datenobjekts geeigneten Weise festgestellt und mit dem Datenobjekt korreliert speicherbar ist.

Auch ist möglich, dass in der Anzeigeeinrichtung weitere Informationen über das Datenobjekt darstellbar sind. Ebenso ist denkbar, dass in der Anzeigeeinrichtung die Information über den Typ des Datenobjekts graphisch darstellbar ist.

Alles bezüglich des Verfahrens Gesagte gilt dabei selbstverständlich auch im Zusammenhang mit der Anzeigeeinrichtung, und jeweils umgekehrt, so dass diesbezüglich wechselweise Bezug genommen wird.

Durch diese Maßnahme kann der Anwender sofort ohne Text erkennen, um welche Art von Datenobjekt es sich bei den angezeigten Datenobjekten jeweils handelt.

Die vorliegende Erfindung ist nicht auf bestimmte Typen von erfassten Datenobjekten beschränkt. Nachfolgend werden hierzu einige nicht ausschließliche Beispiele beschrieben. Dabei können die nachfolgend beschriebenen beispielhaften Datenobjekte jeweils einzeln, oder aber in jeder beliebigen Kombination im/vom Endgerät erfasst und in/auf diesem angezeigt werden.

Die erfassten Datenobjekte können beispielsweise in bevorzugten Ausführungsformen ausgewählt sein aus der Gruppe, die aus Dateien in einem Dateisystem des Endgeräts, Datensätzen in Datenbanken oder Datenlisten im Endgerät und Informationen über extern gespeicherte, auf das Endgerät ladbare Objekte bestehen.

Vorzugsweise sind die erfassten Datenobjekte ausgewählt aus der Gruppe, die aus eingehendem Anruf und/oder ausgehendem Anruf und/oder Sprachnachricht und/oder Textnachricht und/oder Multimedianachricht und/oder Programm und/oder Klingelton und/oder Kalendereintrag und/oder Adressbucheintrag und/oder Information auf einen externen Server verfügbarer Objekte und/oder in einem Dateisystem des Endgeräts gespeicherte Datenobjekten besteht. Diese bevorzugten Datenobjekte zeigen, dass von einer Betriebssystemebene aus betrachtet, sich die verschiedenen Arten von Datenobjekten nicht konsistent darstellen. Zum einen sind die Datenobjekte Gruppen von Dateien eines Dateisystems, andererseits aber auch einzelne Dateien oder Teile von Dateien, so dass zur Durchführung des Verfahrens je nach Art des Datenobjekts unterschiedliche Programme oder Programmteile zur Handhabung verwendet werden müssen. Diese werden beispielsweise durch definierte Schnittstellen mit einer zentralen Verwaltungsinstanz gekoppelt, um dieser beispielsweise eine einheitliche Schnittstelle zur Informationsübermittlung der zu den von den jeweiligen Programmen bearbeiteten Datenobjekten bereitzustellen.

Nachfolgend soll auf spezifische Anforderungen bezüglich verschiedener nicht beschränkend angegebener Arten von Datenobjekten eingegangen werden.

Vorzugsweise ist das erfasste Datenobjekt ein eingehender Anruf, wobei der relevante Zeitpunkt der Beginn oder das Ende des Anrufs ist und die weiteren Informationen die Nummer des Anrufers und/oder sein Name und/oder die Länge des Gespräches umfassen. Der Name steht beispielsweise dann zur Verfügung, wenn im Endgerät eine Adress- oder Telefondatenbank vorhanden ist, die eine Anrufertelefonnummer mit einem Namen korrelieren kann.

In einer weiteren bevorzugten Ausführungsform ist ein erfasstes Datenobjekt ein ausgehender Anruf, wobei der relevante Zeitpunkt der Beginn oder das Ende des Anrufes ist und die weitere Information die Nummer des Angerufenen, oder sein Name, die Länge des Gespräches und/oder die Gesprächskosten umfassen.

In einer weiteren bevorzugten Ausführungsform ist ein erfasstes Datenobjekt eine Sprachnachricht, wobei der relevante Zeitpunkt der Eingang der Sprachnachricht auf einem Server eines Dienstanbieters ist und die weiteren Informationen die Telefonnummer des Anrufers und/oder seinen Namen umfassen.

Bei einer solchen Sprachnachricht handelt es sich um eine vom Anrufer gesprochene Nachricht, die vom Dienstanbieter in einer so genannten "Mailbox" zwischengespeichert und auf Anfrage wiedergegeben wird.

In einer weiteren bevorzugten Ausführungsform ist ein erfasstes Datenobjekt eine Textnachricht (beispielsweise SMS, E-Mail), wobei der relevante Zeitpunkt der Eingang der Textnachricht auf dem Endgerät ist und die weiteren Informationen die Telefonnummer des Anrufers und/oder seinen Namen und/oder den Anfang der Textnachricht (als Übersichtsinformation) umfassen.

In einer weiteren bevorzugten Ausführungsform ist ein erfasstes Datenobjekt eine Multimedianachricht (Video, Musikdateien, MMS und dergleichen), wobei der relevante Zeitpunkt der Eingang der Multimedianachricht auf dem Endgerät ist und die weiteren Informationen die Telefonnummer des Multimedianachrichtensenders und/oder seinen Namen und/oder eine graphische Repräsentation der Multimedianachricht umfassen. Eine solche graphische Repräsentation kann beispielsweise ein so genanntes Thumbnail (Miniaturbild) einer Bildnachricht oder der Anfangsframe einer Videosequenz oder auch ein Icon (Symbolbild), beispielsweise zur Darstellung von Musik, und dergleichen sein.

In einer weiteren bevorzugten Ausführungsform ist ein erfasstes Datenobjekt ein Programm, wobei der relevante Zeitpunkt der Eingang des Programms auf dem Endgerät oder seine letztmalige Verwendung ist und die weiteren Informationen ein Programmsymbol und/oder eine Textbeschreibung für das Programm und/oder ein Programmname des Programms umfassen.

Das Verfahren kann weiterhin dadurch gekennzeichnet sein, dass das Programm ein Java-Programm ist, wie es auf mobilen Endgeräten der jüngeren Generation häufig ablauffähig ist (MIDP-Profil, und dergleichen).

In einer weiteren bevorzugten Ausführungsform ist ein erfasstes Datenobjekt ein Klingelton, wobei der relevante Zeitpunkt der Eingang des Klingeltons auf dem Endgerät oder die letztmalige Verwendung des Klingeltons ist und die weiteren Informationen ein Symbolbild und/oder eine Textbeschreibung des Klingeltons umfassen. Eine Textbeschreibung kann beispielsweise der Titel eines Liedes oder eine lautmalerische Repräsentation des Tons und dergleichen sein.

In einer weiteren bevorzugten Ausführungsform ist ein erfasstes Datenobjekt ein Kalendereintrag, wobei der relevante Zeitpunkt der Zeitpunkt für den Kalendereintrag ist (also der Zeitpunkt, zu dem der Kalendereintrag aktuell wird) und die weiteren Informationen zumindest der Anfang des als Kalendereintrag gespeicherten Textes und/oder ein Alarmsymbol eines Alarms für den Kalendereintrag umfassen.

In einer weiteren bevorzugten Ausführungsform ist ein erfasstes Datenobjekt ein Adressbucheintrag, wobei der relevante Zeitpunkt des Eintrags derjenige ist, zu dem der Adressbucheintrag erfolgt ist oder zuletzt geändert worden ist und die weiteren Informationen zumindest der Name der als Adressbucheintrag gespeicherten Entität umfasst. Unter einer Entität ist hierbei beispielsweise eine Firma, ein Verein, eine Person, eine Familie, etc. zu verstehen, die mit einem gemeinsamen Namen gekennzeichnet werden können.

In einer weiteren bevorzugten Ausführungsform ist ein erfasstes Datenobjekt eine Information über ein auf einem externen Server verfügbares Objekt, wobei der relevante Zeitpunkt der Zeitpunkt ist, an dem die Information über das Objekt auf das Endgerät gelangt ist oder der Zeitpunkt, an dem das Objekt extern verfügbar gemacht worden ist und die weiteren Informationen ein Symbolbild des Objekts und/oder einen Namen für das Objekt umfassen. Das Symbolbild (Icon) kann dabei entweder abhängig vom Typ des verfügbaren Objektes sein oder ein speziell für das konkrete Objekt (beispielsweise ein Programm-Icon) hergestelltes Symbolbild.

In einer weiteren bevorzugten Ausführungsform ist ein erfasstes Datenobjekt ein in einem Dateisystem des Endgeräts gespeichertes Datenobjekt, wobei der relevante Zeitpunkt der Zeitpunkt der letzten Änderung an dem Datenobjekt ist und die weiteren Informationen ein Symbolbild des Datenobjekts und/oder einen Dateinamen umfassen. In einem Dateisystem des Endgeräts gespeicherte Datenobjekte sind üblicherweise Dateien. Bei Verwendung von Dateisystemen, die auf anderen Prinzipien bzw. Paradigmen basieren als Dateien, zum Beispiel objektorientierten Dateisystemen, kann das Datenobjekt jedoch auch etwas anderes als eine Datei sein, beispielsweise ein Objekt im Sinne eines objektorientierten Dateisystems.

Die chronologische Darstellung der Datenobjekte auf der Anzeige des Endgeräts kann in einer bevorzugten Ausführungsform nach Zeitabschnitten unterteilt erfolgen. Durch diese Maßnahme ist es möglich, die Zahl der gleichzeitig angezeigten Datenobjekte in einer sinnvollen Weise zu beschränken. Beispielsweise kann der Zeitabschnitt ein Tag, eine Woche, ein halber Tag, und dergleichen sein. Die Bemessung des Zeitabschnitts kann auch von der Anzahl von jeweils erfassten Datenobjekten für einen Zeitabschnitt abhängen.

Vorzugsweise wird beim Starten des Verfahrens und erstmaliger chronologischer Sortierung und Anzeige ein vorgegebener Zeitabschnitt standardmäßig mit seinen zugehörigen Datenobjekten angezeigt. Dies kann beispielsweise der aktuelle Tag sein. Vorzugsweise wird gemäß Benutzereingabe zwischen Zeitabschnitten und/oder zwischen einer Übersicht und in der Übersicht ausgewählten Zeitabschnitten gewechselt. Dies kann beispielsweise durch die Anzeige von Pfeilen oder Übersichtslisten geschehen, die der Anwender des Endgeräts in einer für das Endgerät spezifischen Weise aktivieren kann, beispielsweise durch Anklicken mit einer Maus oder durch Berühren eines berührungssensitiven Bildschirms oder mittels Tasten oder Scrollrädern. Vorteilhaft kann vorgesehen sein, dass die Darstellung innerhalb der Anzeigeeinrichtung standardmäßig in vorgegebene Zeitabschnitte unterteilt ist. Ebenso kann vorgesehen sein, dass die Anzeigeeinrichtung zwischen wenigstens einer Gliederung nach Zeitabschnitten und wenigstens einer Gliederung nach der Übersicht ausgewählten Zeitabschnitten in der Darstellung veränderlich ist.

In einer besonders bevorzugten Ausführungsform der Erfindung sind die angezeigten Datenobjekte durch den Benutzer auswählbar, wobei bei Auswahl zusätzliche Informationen zu einem ausgewählten Datenobjekt angezeigt werden. Auf diese Weise ist es möglich, von der sehr einfachen Darstellung in einer chronologisch angeordneten Liste zu einer detaillierteren Ansicht von Informationen über das aktivierte Datenobjekt zu gelangen. Eine Anzeigeeinrichtung, beziehungsweise ein dazugehöriges Endgerät, kann vorteilhaft eine Eingabevorrichtung umfassen, womit angezeigte Datenobjekte vom Benutzer auswählbar sind, wobei bei Auswahl in der Anzeigeeinrichtung zusätzliche Informationen zu einem ausgewählten Datenobjekt angezeigt werden.

Ebenfalls wird es bevorzugt, dass angezeigte Datenobjekte vom Benutzer auswählbar sind und ein ausgewähltes Datenobjekt gemäß seinem Typ aktiviert wird. Unter einer Aktivierung ist hierbei zu verstehen, dass eine Aktion auf Betriebssystemebene gestartet wird, um das Datenobjekt anzeigen/ablaufen lassen zu können, wobei beispielsweise das Datenobjekt mittels eines ihm zugeordneten Programms dargestellt wird.

Dies kann beispielsweise bedeuten, dass bei einem Datenobjekt, das eine Videodatei ist, ein Videoabspielprogramm gestartet wird, um das Video abzuspielen oder dass bei einem Adressbucheintrag das Adressverwaltungsprogramm gestartet wird, um die Adresse mit einigen relevanten Informationen anzuzeigen und bearbeitbar zu machen.

In einer weiteren bevorzugten Ausführungsform sind angezeigte Datenobjekte vom Benutzer auswählbar und zu einem ausgewählten Datenobjekt wird ein Menü mit Befehlsoptionen zur Auswahl durch den Benutzer angezeigt, das entsprechend dem Typ des ausgewählten Datenobjekts aufgebaut ist. Solche Befehlsoptionen können beispielsweise bei einer Textnachricht als Datenobjekt die Optionen "löschen", "antworten", "weiterleiten", und dergleichen umfassen oder bei einem Kalendereintrag "ändern", "löschen", "bestätigen", und dergleichen.

Es versteht sich, dass alle drei Gruppen von Möglichkeiten zur Auswahl von Datenobjekten, die oben dargestellt worden sind, gleichzeitig implementierbar sind, wobei unterschiedliche Arten von Auswahlverfahren (beispielsweise Einfachklick, Doppelklick, Umschaltklick, und dergleichen) verwendet werden.

In einem weiteren Aspekt ist die Erfindung auf ein Endgerät für die Verwendung mit einem Kommunikationsnetzwerk gerichtet, welches aufweist Mittel zum Eingeben und/oder Speichern von Datenobjekten in einem Speicher des Endgeräts; Mittel zum Bestimmen eines relevanten Zeitpunkts für erfasste Datenobjekte; Mittel zum Sortieren der erfassten Datenobjekte in einer chronologischen Abfolge gemäß ihrer relevanten Zeitpunkte; und ein Anzeigenmittel zum Anzeigen von Informationen zu den erfassten Datenobjekten gemäß ihrer Sortierung, wobei zu jedem der dargestellten, erfassten Datenobjekte zumindest der relevante Zeitpunkt und eine Information über einen Typ des Datenobjekts anzeigbar sind.

Alles bezüglich des Verfahrens oben Ausgeführte gilt gleichermaßen für das erfindungsgemäße Endgerät und umgekehrt, so dass wechselweise Bezug genommen wird.

Vorteilhaft kann vorgesehen sein, dass in den Anzeigemitteln des Endgeräts die chronologische Darstellung der Datenobjekte nach Zeitabschnitten unterteilt ist.

Es wird bevorzugt, dass die verschiedenen Mittel als ein oder mehrere Programmobjekte implementiert sind. Es ist jedoch genauso vorstellbar, dass spezielle Schaltkreise, elektronische Bauelemente und dergleichen eingesetzt werden, um die erfindungsgemäße Funktionalität in einem Endgerät zu erreichen.

Die Erfindung kann weiterhin dadurch gekennzeichnet sein, dass das Endgerät Mittel zum Versehen von Datenobjekten mit einem relevanten Zeitpunkt umfasst.

In einer weiteren bevorzugten Ausführungsform ist das Endgerät durch Mittel zum Empfangen von Datenobjekten oder von Informationen über Datenobjekte über das Kommunikationsnetzwerk gekennzeichnet. Das Empfangsmittel kann der Empfangsteil eines Mobiltelefons nach GSM- oder UMTS-Standard und dergleichen sein, kann jedoch auch ein WLAN-Interface, WMAC-Interface oder Ethernet-Interface bei kabelgebundenen Endgeräten sein.

Das Endgerät kann weiterhin spezifische Mittel zur Durchführung des erfindungsgemäßen Verfahrens aufweisen.

Das Endgerät gemäß der Erfindung kann vorzugsweise als Mobiltelefon oder als Personal Digital Assistent (PDA) ausgebildet sein.

Das Mobiltelefon kann ein Mobiltelefon mit einem der aktuell üblichen Geräteunabhängigen Betriebssysteme sein.

In einem weiteren Aspekt ist die Erfindung auf ein Logbuchprogramm für ein Endgerät gerichtet, insbesondere für ein erfindungsgemäßes Endgerät, das Datenobjekte verschiedener Typen typunabhängig, aber abhängig von für die erfassten Datenobjekte relevanten Zeitpunkten chronologisch sortiert auf einer Anzeige des Endgeräts anzeigt.

Dieses Logbuchprogramm weist vorzugsweise Mittel zur Durchführung des erfindungsgemäßen Verfahrens auf.

Alles bezüglich des Verfahrens und Endgeräts oben Ausgeführte gilt gleichermaßen für das erfindungsgemäße Logbuchprogramm und umgekehrt, so dass wechselweise Bezug genommen wird.

Nachfolgend werden konkrete Ausführungsformen der nachfolgenden Erfindung näher beschrieben, wobei auf die beigefügten Zeichnungen Bezug genommen wird, in denen folgendes dargestellt ist:
- Fig. 1: zeigt eine beispielhafte Anzeige eines Endgeräts, auf dem eine chronologisch sortierte Liste mit Informationen zu Datenobjekten dargestellt wird;
- Fig. 2: zeigt eine erfindungsgemäß verwendete Anzeige eines Endgeräts, bei der ein Wechsel der Zeitabschnitte dargestellt wird; und
- Fig. 3: zeigt, wie von der Anzeige mit der Liste von erfassten Datenobjekten ausgehend eine Auswahl durchgeführt werden kann.

Nachfolgend soll die Erfindung anhand eines Mobiltelefons und von verschiedenen, typischen Vorgängen für ein solches Mobiltelefon und ihrem Bezug zum erfindungsgemäßen Verfahren dargestellt werden.

Wenn das beispielhaft gewählte Telefon eine Sprachnachricht empfängt, erscheint die Anruferidentifikation, wenn der Dienstanbieter sie bereitstellt oder der Name des Anrufers im Adressbuch des Telefons gefunden worden ist. Eine aufgesprochene Sprachnachricht erscheint beispielsweise rechts vom Zeitpunkt, an dem der Anruf einging. Diesem folgt die Anrufernummer. Falls keine Nummer verfügbar ist, erscheint das Wort "Sprachnachricht" oder ähnliches. Schließlich erscheint rechts von der Anrufernummer ein Icon, das die Sprachnachricht als Datenobjekt kennzeichnet.

Wenn das Telefon eine Textnachricht empfängt, erscheint die Sendernummer oder der Name des Senders, sofern er anhand der Nummer im Adressbuch des Telefons identifiziert werden konnte. Die erste Zeile des erfassten Texts der Textnachricht erscheint neben dem Zeitpunkt, an den die Nachricht einging. Diesem folgt die Sendertelefonnummer. Falls diese nicht verfügbar ist, erscheint die Information "Textnachricht". Schließlich wird als weitere Information ein Icon, das das Datenobjekt als Textnachricht kennzeichnet, mit angezeigt, beispielsweise rechts der Sendernummer.

Jegliche gespeicherten Bilder oder Videos, die aufgenommen oder empfangen worden sind, werden in der zeitbasierten Ansicht dargestellt. Diese erscheinen mit dem relevanten Zeitpunkt, an dem das Medium gespeichert, gesendet oder empfangen worden ist. Die Mediendatei erscheint rechts vom Zeitpunkt als Miniaturbild (Thumbnail). Falls die gesendete oder empfangene Multimediadatei eine Nachricht ist, wird sie automatisch unter Verwendung von LBS (Location Based Services, ortsabhängige Dienste), um den Ort zu zeigen, an dem das Foto aufgenommen wurde. Falls der Dateisender einen Dateinamen hinzufügt, ersetzt dieser beispielsweise die automatisierte LBS-Markierung.

Bezüglich heruntergeladener Inhalte ist folgende Vorgehensweise gemäß der Erfindung vorstellbar. Wenn ein heruntergeladenes Java-Spiel in der zeitbasierten, erfindungsgemäßen Ansicht erscheint, wird ein Miniaturbild (sofern verfügbar) rechts des relevanten Zeitpunkts dargestellt, zu dem das Spiel heruntergeladen worden ist. Es wird eine Markierung rechts des Miniaturbildes dargestellt, welche eine Textbeschreibung des Spiels (sofern vorhanden) gibt.

Falls die heruntergeladene Datei ohne definiertes Symbol (Icon) erscheint, kann ein Standardsymbol angezeigt werden. Falls in ähnlicher Weise eine heruntergeladene Datei ohne Textbeschreibung eintrifft, kann ein standardisierter Text dargestellt werden.

Wenn ein heruntergeladener Klingelton in der zeitbasierten erfindungsgemäßen Ansicht dargestellt wird, wird ein Miniaturbild (sofern verfügbar) rechts von dem Zeitpunkt, zu dem der Klingelton heruntergeladen worden ist, angezeigt. Es wird eine Markierung neben dem Miniaturbild oder Icon dargestellt, welche eine Textbeschreibung des Klingeltons gibt. Falls die heruntergeladene Datei ohne definiertes Symbol eintrifft, kann ein Standardsymbol verwendet werden. In ähnlicher Weise kann, falls die heruntergeladene Datei ohne Textbeschreibung eintrifft, sie mittels Standardtext dargestellt werden.

Alle Kalendereinträae erscheinen neben der ausgewählten Zeit. Die Kalendereinträge zeigen den Kopf des Kalendereintrags, der von dem Kalenderführenden benannt worden ist. Falls der Anwender eine Erinnerung für den Eintrag angegeben hat, wird ein Erinnerungs-Icon neben dem Kalendereintragtext dargestellt. Falls der Benutzer einen Alarm für die Einstellung eingegeben hat, erscheint ein Alarmsymbol neben dem Kalendereintragtext.

Falls ein neuer Adressbucheintrag zum Adressbuch hinzugefügt worden ist oder das Telefon einen Anruf durchgeführt oder entgegengenommen hat, erscheint ein Eintrag in der erfindungsgemäßen zeitbasierten Ansicht.

Wenn das Telefon Push- und Pull-Inhalte speichert, erscheint in der erfindungsgemäßen zeitbasierten Ansicht neben dem Zeitpunkt des Inhalteingangs ein Miniaturbild. Daneben kann eine Markierung dargestellt werden, die eine Textbeschreibung des Inhalts angibt.

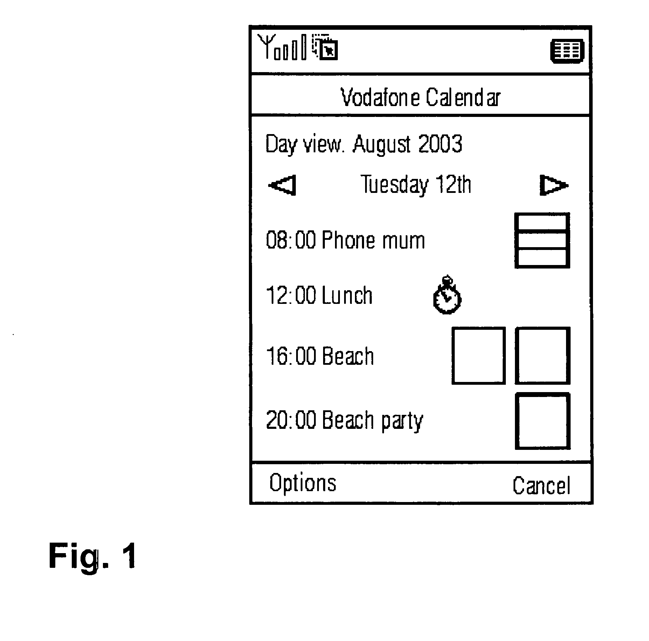

Fig. 1 zeigt einen Übersichtsbildschirm mit vier aufgelisteten, chronologisch angeordneten Datenobjekten, die von oben nach unten der Anruf eines Anrufers, ein Alarm und zwei Fotositzungen sind. Über der Liste befindet sich eine Angabe zum Zeitabschnitt, der auf der Liste dargestellt wird, hier Dienstag der zwölfte August 2003. Die anderen Informationen sind normale Informationen der Anzeige eines Mobiltelefons.

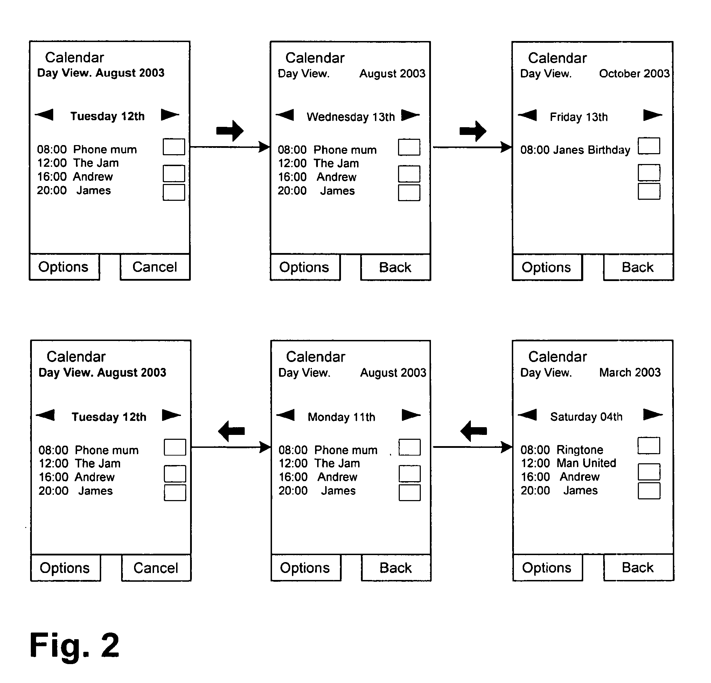

Fig. 2 zeigt, wie der Zeitabschnitt gewechselt werden kann, wie durch die Pfeile angedeutet, wobei mit dem Wechsel des Zeitabschnitts die vorherige Liste durch eine Liste mit Datenobjekten, deren relevante Zeitpunkte im neu ausgewählten Zeitabschnitt liegen, ersetzt wird.

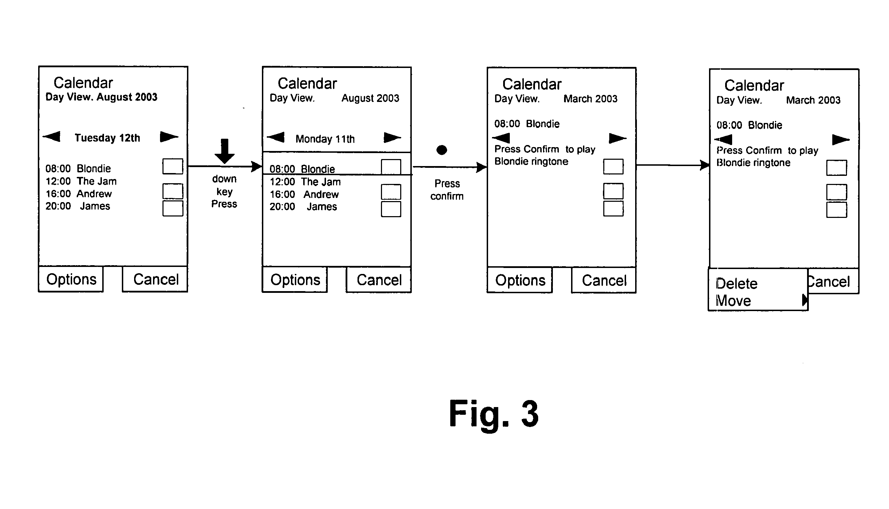

Fig. 3 zeigt, wie ein bestimmtes Datenobjekt auf der Liste ausgewählt wird, was auf der Anzeige durch eine Unterstreichung des ausgewählten Datenobjekts symbolisiert wird und daraufhin eine Aktivierung des Datenobjekts so erfolgt, dass ein zugehöriges Programm das Datenobjekt verarbeitet. !m vorliegenden Fall handelt es sich um einen Klingelton einer Sängerin, der durch Betätigen einer Bestätigungstaste abgespielt wird. Zusätzlich wird noch eine Auswahloption dargestellt, welche Möglichkeiten der Bearbeitung des ausgewählten Datenobjekts noch existieren, im vorliegenden Fall Löschen des Datenobjekts oder Bewegen in ein anderes Unterverzeichnis.

## Patentansprüche

1. Verfahren zum Handhaben von Informationen über Datenobjekte unterschiedlicher Typen in einem Endgerät, bei dem jeweils zumindest ein relevanter Zeitpunkt für die von dem Verfahren erfassten Datenobjekte bestimmt wird; bei dem die erfassten Datenobjekte in einer chronologischen Abfolge gemäß ihrer relevanten Zeitpunkte sortiert werden; und bei dem Informationen zumindest einer Teilmenge der erfassten Datenobjekte gemäß ihrer Sortierung auf einer Anzeige des Endgeräts angezeigt werden; wobei vorzugsweise zu jedem der angezeigten, erfassten Datenobjekte zumindest der relevante Zeitpunkt und eine Information über einen Typ des Datenobjekts angezeigt werden.

2. Verfahren nach Anspruch 1, **dadurch gekennzeichnet, dass** bei jeder Änderung an den Daten des Endgeräts ein relevanter Zeitpunkt in einer zum Typ eines geänderten oder hinzugefügten Datenobjekts geeigneten Weise festgestellt und mit dem Datenobjekt korreliert gespeichert wird.

3. Verfahren nach Anspruch 1 oder 2, **dadurch gekennzeichnet, dass** abhängig von dem Typ des angezeigten Datenobjekts unterschiedliche weitere Informationen über das Datenobjekt angezeigt werden.

4. Verfahren nach einem der Ansprüche 1 bis 3, **dadurch gekennzeichnet, dass** die Information über den Typ des Datenobjekts mittels einer graphischen Darstellung erfolgt.

5. Verfahren nach einem der Ansprüche 1 bis 4, **dadurch gekennzeichnet, dass** die chronologische Darstellung nach Zeitabschnitten unterteilt erfolgt.

6. Verfahren nach Anspruch 5, **dadurch gekennzeichnet, dass** beim Starten des Verfahrens ein vorgegebener Zeitabschnitt standardmäßig angezeigt wird.

7. Verfahren nach Anspruch 5 oder 6, **dadurch gekennzeichnet, dass** gemäß Benutzereingabe zwischen Zeitabschnitten und/oder zwischen einer Übersicht und in der Übersicht ausgewählten Zeitabschnitten gewechselt wird.

8. Endgerät für die Verwendung mit einem Kommunikationsnetzwerk, aufweisend: Mittel zum Eingeben und/oder Speichern von Datenobjekten in einem Speicher des Endgeräts; Mittel zum Bestimmen eines relevanten Zeitpunkts für erfasste Datenobjekte; Mittel zum Sortieren der erfassten Datenobjekte in einer chronologischen Abfolge gemäß ihrer relevanten Zeitpunkte; und ein Anzeigemittel zum Anzeigen von Informationen zu den erfassten Datenobjekten gemäß ihrer Sortierung, wobei zu jedem der dargestellten, erfassten Datenobjekte zumindest der relevante Zeitpunkt und eine Information über einen Typ des Datenobjekts anzeigbar sind.

9. Endgerät nach Anspruch 8, **gekennzeichnet durch** Mittel zum Versehen von Datenobjekten mit einem relevanten Zeitpunkt.

10. Endgerät nach Anspruch 8 oder 9, **gekennzeichnet durch** Mittel zum Empfangen von Datenobjekten oder von Informationen über Datenobjekte über das Kommunikationsnetzwerk.

11. Logbuchprogramm für ein Endgerät, insbesondere für ein Endgerät nach einem der Ansprüche 8 bis 10, das Datenobjekte verschiedener Typen typunabhängig, aber abhängig von für die erfassten Datenobjekte relevanten Zeitpunkten chronologisch sortiert auf einer Anzeige des Endgeräts anzeigt.
